# EUROPÄISCHE PATENTSCHRIFT

(11) **EP 1 044 760 B1**
(45) Veröffentlichungstag und Bekanntmachung des Hinweises auf die Patenterteilung: **09.06.2004**
(21) Anmeldenummer: 00102907.3
(22) Anmeldetag: 12.02.2000
(51) Int. Cl.: B23Q 3/18, B23B 31/22, B23B 31/30

(54) **Spanneinrichtung**
Clamping device
Dispositif de serrage

(30) Priorität: 15.04.1999 DE 19917005
(43) Veröffentlichungstag der Anmeldung: 18.10.2000
(73) Patentinhaber: Vischer & Bolli AG, 8600 Dübendorf 1 (CH)
(72) Erfinder: Haltiner, Marcel, CH-9464 Montlingen (CH)
(74) Vertreter: Gleiss, Alf-Olav, Dipl.-Ing.

(56) Entgegenhaltungen:
- EP-A- 0 468 383
- EP-A- 0 555 810
- EP-A- 0 614 725
- EP-A- 0 827 806
- EP-A- 0 922 529
- DE-A- 3 713 023

## Beschreibung

Die vorliegende Erfindung betrifft eine Spanneinrichtung zur Fixierung eines Einzugsbolzens an einem Maschinentisch, einer Grundplatte oder dergleichen mit einer Aufnahme, in die der Einzugsbolzen durch eine Einsetzöffnung in einer Gehäusewandung einsetzbar ist, und einem Spannmechanismus, um den Einzugsbolzen in der Aufnahme zu fixieren.

Die Bearbeitung von Werkstücken ist häufig sehr komplex und kann eine Vielzahl von zerspanenden und spanlosen Arbeitsgängen an unterschiedlichen Bearbeitungsmaschinen umfassen, um aus einem Rohling das fertige Bauteil herzustellen. Bei allen Fertigungsabläufen ist dabei wesentlich, daß das Werkstück bei jedem Arbeitsgang eine definierte Lage an der jeweiligen Werkzeugmaschine einnimmt. Zu diesem Zweck ist es in der Praxis üblich, das zu bearbeitende Werkstück zunächst auf eine Trägerpalette aufzuspannen und dann die ganze Einheit über mehrere Einzugsbolzen, die an der Unter- bzw. Rückseite der Trägerpalette vorgesehen und als Zentrierelemente ausgebildet sind, an der jeweiligen Werkzeugmaschine festzuspannen, indem die Einzugsbolzen in entsprechende Schnellspanneinrichtungen, die am Maschinentisch vorgesehen sind, eingesetzt werden. In der Produktion kann auf diese Weise die Lage der Schnellspanneinrichtungen als fester Maschinenparameter berücksichtigt werden, so daß es lediglich erforderlich ist, jeweils das Werkstück exakt an der Trägerpalette zu positionieren. Das eigentliche Fest- und Umspannen der Einheit aus Werkstück und Trägerpalette an den Maschinen kann dann sehr schnell und unproblematisch erfolgen, ohne daß eine weitere Positionierung notwendig ist.

Bei aus der DE-U 297 22 730.0 bekannten Spanneinrichtungen, welche als hydraulisch/mechanische Spanneinrichtungen ausgebildet sind, ist im Bereich der Einsetzöffnung der Aufnahme eine zylindrische Paßfläche vorgesehen, die mit einem entsprechenden Bund am Einzugsbolzen zusammenwirkt, um den Einzugsbolzen in der Aufnahme zu zentrieren. Die Passungen zwischen Einzugsbolzen und Einsetzöffnung sind hierbei als Spielpassungen ausgebildet, damit das Einsetzen des Einzugsbolzens nicht behindert wird. Die Verwendung einer solchen Spielpassung ist jedoch mit einer spielbedingten Positionsungenauigkeit verbunden.

Aufgabe der Erfindung ist es daher, eine Spanneinrichtung der eingangs genannten Art so auszubilden, daß ein Einzugsnippel spielfrei positioniert und fixiert werden kann.

Diese Aufgabe ist erfindungsgemäß dadurch gelöst, daß die Gehäusewandung im Bereich der Einsetzöffnung eine konische Zentrierfläche für den Einzugsbolzen aufweist und die Gehäusewandung im Bereich der Zentrierfläche axial federnd ausgebildet ist. Erfindungsgemäß wird somit ein Einzugsbolzen über die konische Zentrierfläche exakt, d.h. ohne Spiel, in radialer Richtung zentriert. Zusätzlich kann auch eine im wesentlichen spielfreie axiale Fixierung durch die federnde Ausbildung der Gehäusewandung im Bereich der Zentrierfläche erreicht werden. Verwendet man beispielsweise in bekannter Weise einen Spannmechanismus mit Kugeln, die in eine Vertiefung des Einzugsbolzens hineingedrückt werden, wird der Einzugsbolzen entgegen der elastischen Rückstellkräfte der Gehäusewandung im Bereich der Zentrierfläche in die Aufnahme eingezogen, bis die Kugeln in die Vertiefung des Einzugsbolzens eingreifen. Hierdurch wird eine genaue axiale Positionierung und Fixierung des Einzugsbolzens in der Aufnahme erreicht.

Zur Erzielung der elastischen Nachgiebigkeit der Gehäusewandung in axialer Richtung ist gemäß einer Ausführungsform der Erfindung vorgesehen, daß die Gehäusewandung im Bereich der Zentrierfläche dünnwandig ausgeführt ist, wobei die Wandstärke, die wenigstens erreicht werden muß, um die gewünschten Federeigenschaften herbeizuführen, von der Elastizität des Materials der Gehäusewandung abhängt.

Alternativ kann in der Gehäusewandung in Einschubrichtung des Einzugsbolzens gesehen hinter der Zentrierfläche ein radialer Einstich insbesondere in Form einer Ringnut vorgesehen sein, wodurch die Wandung im Bereich der Zentrierfläche ebenfalls dünnwandig und somit elastisch wird.

Die Elastizität kann zusätzlich noch erhöht werden, indem in der Zentrierfläche Radialnuten vorgesehen sind.

Hinsichtlich weiterer vorteilhafter Ausgestaltungen der Erfindung wird auf die Unteransprüche sowie die nachfolgende Erläuterung von Ausführungsbeispielen unter Bezugnahme auf die beiliegende Zeichnung verwiesen. In der Zeichnung zeigt
- Figur 1: im Längsschnitt eine Ausführungsform einer erfindungsgemäßen Spanneinrichtung mit eingesetztem und festgespanntem Einzugsnippel,
- Figur 2: die Spanneinrichtung aus Figur 1 mit gelöstem Einzugsnippel,
- Figur 3: den Deckel der Spanneinrichtung aus Figur 1 mit eingesetztem Einzugsnippel in vergrößerter Darstellung,
- Figur 4: eine alternative Ausführungsform eines Deckels für eine Spanneinrichtung gemäß der Figur 1,
- Figur 5: im Längsschnitt eine weitere Ausführungsform eines Deckels für eine Spanneinrichtung gemäß der Figur 1 und
- Figur 6: den Deckel aus Figur 5 in Draufsicht.

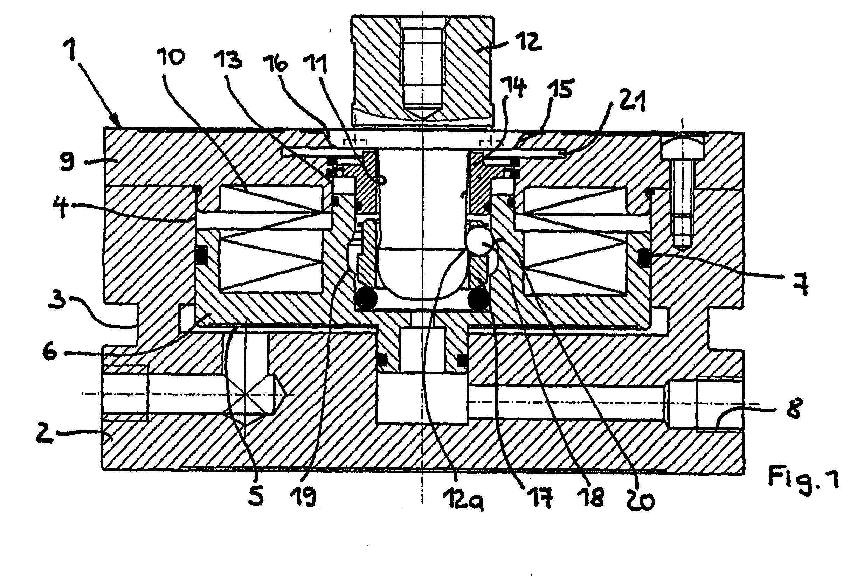

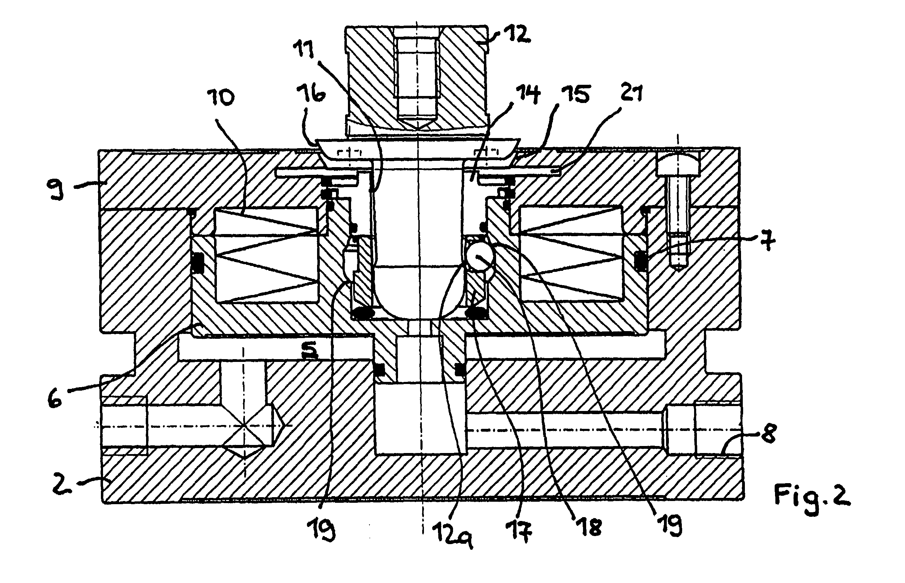

In den Figuren 1 und 2 ist eine Ausführungsform einer erfindungsgemäßen Spanneinrichtung 1 dargestellt. Zu der Spanneinrichtung 1 gehört ein als Zylinder ausgebildetes Gehäuse 2, das außenseitig eine Umfangsnut 3 aufweist, in die Spannwerkzeuge zur Fixierung der Spanneinrichtung 1 an einem nicht dargestellten Maschinentisch, einer Grundplatte oder dergleichen eingreifen können. In die Zylinderbohrung 4 des Gehäuses 2 ist unter Bildung eines Druckraums 5 ein Kolben 6 axial bewegbar eingesetzt, wobei der Ringspalt zwischen Zylinderbohrung 4 und Kolben 6 durch einen O-Ring 7 abgedichtet ist. In den Boden der Zylinderbohrung 4 mündet ein im Gehäuse 2 ausgebildeter Kanal 8, durch welchen dem Druckraum 5 ein Hydraulikmittel wie beispielsweise Öl zugeführt werden kann.

Die oben offene Oberseite des Gehäuses 2 ist durch einen Deckel 9 verschlossen, der an dem Gehäuse 2 festgeschraubt ist. Zwischen dem Deckel 9 und dem Kolben 6 ist ein Tellerfederpaket 10 angeordnet, das den Kolben 6 in Richtung des Bodens der Zylinderbohrung 4 drückt.

In der dem Druckraum 5 gegenüberliegenden Oberseite des Kolbens 6 ist eine Sackbohrung vorgesehen, die eine Aufnahme 11 für einen Einzugsbolzen 12 bildet, der in die Aufnahme 11 durch eine im Deckel 9 vorgesehene Einsetzöffnung 13 eingeschoben werden kann. Zur Erleichterung dieses Einschiebevorgangs ist in der Einsetzöffnung 13 ein hülsenförmiges Führungselement 14 vorgesehen, und zur exakten Positionierung des Einzugsnippels 12 in der Spanneinrichtung 1 ist der obere Bereich der Einsetzöffnung 13 als konische Zentrierfläche 15 ausgebildet, die zur spielfreien Zentrierung des Einzugsbolzens 12 mit einem ebenfalls konisch ausgebildeten Flansch 16 des Einzugsbolzens 12 zusammenwirkt.

Zur Fixierung des Einzugsbolzens 12 in der Aufnahme 11 ist ein Spannmechanismus vorgesehen. Dieser umfaßt in an sich bekannter Weise einen in die Aufnahme 11 eingesetzten Kugelkäfig 17, in dem mehrere Kugeln 18 radial verstellbar gehalten sind. Diese Kugeln 18 können je nach Kolbenstellung in eine Nut 19 in der Wandung der Aufnahme 11 nach außen ausweichen, so daß der Einzugsbolzen 12 in den Kugelkäfig 17 eingesetzt oder aus diesem herausgenommen werden kann, oder durch die wandung der Aufnahme 11 an einem solchen Ausweichen gehindert und damit in Eingriff mit einer entsprechenden Gegenfläche 12a, beispielsweise einer Ringnut, am Einzugsbolzen 12 gehalten werden, wie dies in Figur 12 dargestellt ist.

In der Zeichnung zeigt die Figur 1 die Spanneinrichtung 1 in ihrer Spannstellung, in der der Druckraum 5 drucklos ist und der Kolben 6 durch das Tellerfederpaket 10 nach unten gedrückt wird, so daß eine obere Schrägfläche 20 der Nut 19 die Kugel 18 in Eingriff mit dem Einzugsbolzen 12 hält. Wenn jetzt der Druckraum 5 über den Kanal 8 mit Druckmittel beaufschlagt wird, wird der Kolben 6 entgegen der Rückstellkraft des Tellerfederpakets 10 nach oben in die in Figur 2 dargestellten Lage gedrückt, so daß die Nut 19 den Kugeln 18 Raum läßt, radial nach außen auszuweichen, so daß der Einzugsbolzen 12 aus der Spanneinrichtung 1 herausgenommen bzw. dann wieder in diese eingesetzt werden kann.

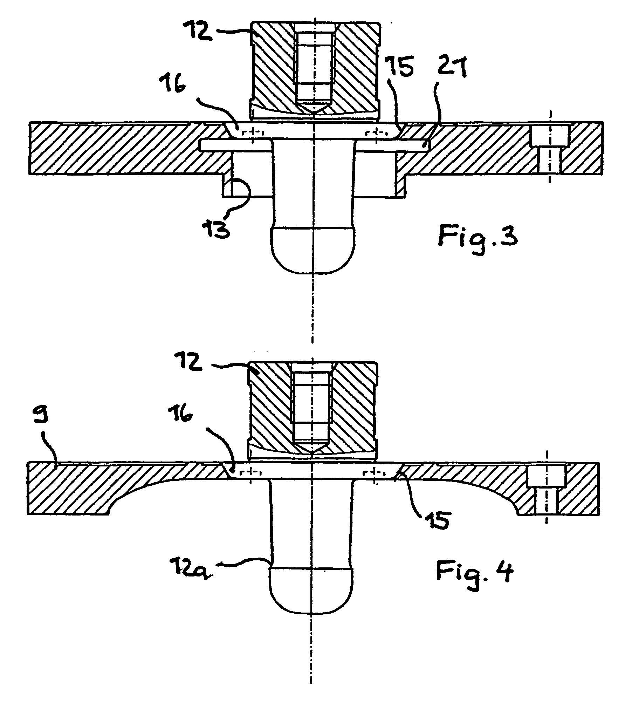

Um den Einzugsbolzen 12 in der Aufnahme 11 auch in axialer Richtung spielfrei positionieren zu können, ist erfindungsgemäß der Deckel 9 im Bereich der Zentrierfläche 15 axial federnd ausgebildet. Dies wird bei der in Figur 1 und in vergrößertem Maßstab auch in Figur 3 dargestellten Ausführungsform dadurch erreicht, daß unterhalb der Zentrierfläche ein radialer Einstich 21 ausgebildet ist, so daß die Wandung im Bereich der Zentrierfläche 15 relativ dünn ist und nach innen ausweichen kann. Die Anordnung ist dabei so getroffen, daß die Wandung der Gegenfläche 12a, mit welcher die Kugeln 18 zusammenwirken, so ausgebildet sind, daß die Kugeln 18, wenn sie zur Fixierung des Einzugsbolzens 12 nach innen gedrückt werden, bei ihrer nach innen gerichteten Bewegung den Einzugsbolzen 12 unter elastischer Verformung des Deckels 9 im Bereich der Zentrierfläche nach unten, d.h. in die Spanneinrichtung 1 hineinziehen. Die Rückstellkräfte bewirken dann, daß die Gegenfläche des Einzugsbolzens 12 ständig in Kontakt mit den Kugeln 18 gehalten wird, so daß der Einzugsbolzen 12 radial axial fixiert ist.

In Figur 4 ist eine alternative Ausbildung des Deckels 9 dargestellt, bei der die Elastizität im Bereich der Zentrierfläche 15 durch eine dünnwandige Ausbildung des Dekkels 9 erreicht wird.

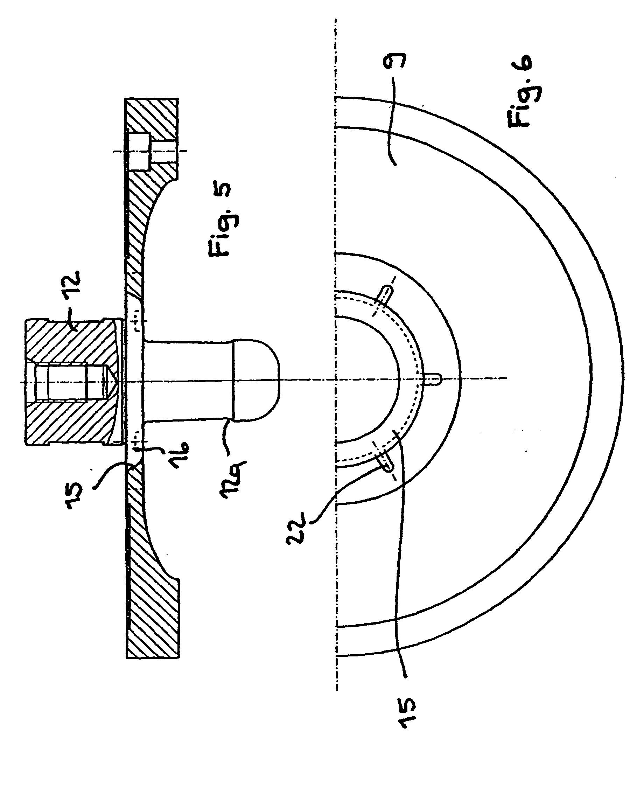

Wie in den Figuren 5 und 6 dargestellt ist, können bei dieser Ausführungsform zusätzlich noch Radialnuten 22 im Bereich der Zentrierfläche 15 vorgesehen sein, wodurch sich die Elastizität noch erhöhen läßt.

## Patentansprüche

1. Spanneinrichtung (1) zur Fixierung eines Einzugsbolzens (12) an einem Maschinentisch, einer Grundplatte oder dergleichen mit einer Aufnahme (11), in die der Einzugsbolzen (12) durch eine Einsetzöffnung (13) in einer Gehäusewandung (9) axial einsetzbar ist, und einem Spannmechanismus, um den Einzugsbolzen (12) in der Aufnahme (11) zu fixieren, **dadurch gekennzeichnet, daß** die Gehäusewandung (9) im Bereich der Einsetzöffnung (13) eine konische Zentrierfläche (15) für den Einzugsbolzen (12) aufweist und die Gehäusewandung (9) im Bereich der Zentrierfläche (15), axial federnd ausgebildet ist.

2. Spanneinrichtung nach Anspruch 1, **dadurch gekennzeichnet, daß** die Gehäusewandung (9) im Bereich der Zentrierfläche (15) zur Erreichung der Federeigenschaft dünnwandig ausgeführt ist.

3. Spanneinrichtung nach Anspruch 1, **dadurch gekennzeichnet, daß** in der Gehäusewandung (9) in Einschubrichtung des Einzugsbolzens (12) gesehen hinter der zentrierfläche (15) ein radialer Einstich (21) insbesondere in Form einer Ringnut vorgesehen ist.

4. Spanneinrichtung nach einem der vorherigen Ansprüche, **dadurch gekennzeichnet, daß** in der zentrierfläche (15) Radialnuten (22) vorgesehen sind.

5. Spanneinrichtung nach einem der vorherigen Ansprüche, **dadurch gekennzeichnet, daß** die Einsetzöffnung (13) in einem Deckel (9) ausgebildet ist.

## Claims

1. Clamping device (1) for securing a draw-in bolt (12) on a machine table, a base plate or the like comprising a receptacle (11) into which the draw-in bolt (12) is axially insertable through an insertion opening (13) formed in a housing wall (9), and a clamping mechanism for securing the draw-in bolt (12) in the receptacle (11), **characterized in that** the housing wall (9) is formed in the region of the insertion opening (13) with a conical centering surface (15) for the draw-in bolt (12) and the housing wall (9) is formed in an axially resilient manner in the region of the centering surface (15).

2. Clamping device according to claim 1, **characterized in that** the housing wall (9) in its region of the centering surface (15) is thin-walled to achieve the resilient characteristic.

3. Clamping device according to claim 1, **characterized in that** the housing wall (9) is provided with a radial recess in particular in the form of a ring groove behind the centering surface (15) as viewed in the insertion direction of the draw-in bolt (12).

4. Clamping device according to any preceding claim, **characterized in that** radial grooves (22) are provided in the centering surface (15).

5. Clamping device according to any preceding claim **characterized in that** the insertion opening (13) is provided in a cover (9).

## Revendications

1. Dispositif de serrage (1) pour la fixation d'un boulon à serrage (12) sur une table de machine, à une plaque de base ou quelque chose de similaire avec une réce p-tion (11) dans laquelle on peut installer de façon axiale le boulon à serrage (12) par une ouverture à insertion (13) dans une paroi du boîtier (9), et avec un méc a-nisme de serrage pour fixer le boulon à serrage (12) dans la réception (11), **ca-ractérisé en ce que** la paroi du boîtier (9) présente dans la zone de l'ouverture à insertion (13) une surface de centrage (15) conique pour le boulon à serrage (12) et **en ce que** la paroi du boîtier (9) est formée dans la zone de la surface de ce n-trage (15) de façon axialement élastique.

2. Dispositif de serrage selon la revendication 1, **caractérisé en ce que** la paroi du boîtier (9) est réalisé avec une paroi mince dans la zone de la surface dé centrage (15) pour obtenir la propriété élastique.

3. Dispositif de serrage selon la revendication 1, **caractérisé en ce qu'**on a prévu dans la paroi du boîtier (9), en direction de l'introduction du boulon à serrage (12), derrière la surface de centrage (15), une entaille radiale (21), notamment sous la forme d'une rainure annulaire.

4. Dispositif de serrage selon une des revendications précédentes, **caractérisé en ce que** dans la surface de centrage (15), on a prévu des rainures radiales (22).

5. Dispositif de serrage selon une des revendications précédentes, **caractérisé en ce que** l'ouverture d'introduction (13) est formée dans un couvercle (9).
